Europäisches Patentamt

European Patent Office

Office européen des brevets

(11) Veröffentlichungsnummer: **0 254 977 B1**

# EUROPÄISCHE PATENTSCHRIFT

(12)

(45) Veröffentlichungstag der Patentschrift: **15.04.92**

(21) Anmeldenummer: **87110285.1**

(22) Anmeldetag: **16.07.87**

(51) Int. Cl.5: **B65G 45/00**

(54) **Abstreifvorrichtung für den Rücklaufbereich von Förderbändern.**

(30) Priorität: **01.08.86 DE 3626131**

(43) Veröffentlichungstag der Anmeldung:
**03.02.88 Patentblatt 88/05**

(45) Bekanntmachung des Hinweises auf die
Patenterteilung:
**15.04.92 Patentblatt 92/16**

(84) Benannte Vertragsstaaten:
**AT BE CH DE ES FR GB IT LI LU NL SE**

(56) Entgegenhaltungen:
**EP-A- 0 090 985**
**DE-A- 2 534 625**
**DE-A- 3 229 116**
**GB-A- 2 081 662**
**US-A- 4 197 936**

(73) Patentinhaber: **Schwarze, Hans-Otto**
**Esseler Strasse 170**
**W-4350 Recklinghausen(DE)**

(72) Erfinder: **Schwarze, Hans-Otto**
**Esseler Strasse 170**
**W-4350 Recklinghausen(DE)**

(74) Vertreter: **Patentanwälte Wenzel & Kalkoff**
**Flasskuhle 6 Postfach 2448**
**W-5810 Witten(DE)**

## Beschreibung

Die Erfindung betrifft eine Abstreifvorrichtung für den Rücklaufbereich von Förderbändern, bestehend aus einem einstellbaren, feststehenden oder aus einem federnd gelagerten Träger quer zur Laufrichtung des Gurtbandes und mehreren, jeweils an Füßen gehaltenen Abstreifelementen, die nebeneinander ggfs. in zwei Reihen an dem Träger gehalten sind, und jeweils eine schälend zur Gurtbandlaufrichtung angestellte Abstreiflamelle tragen, die mit Hilfe eines Abstreifkörpers und durch eine Torsionsfeder zwischen jedem Fuß und diesem Abstreifkörper gelenkig um eine Achse quer zur Gurtbandlaufrichtung und federnd für eine elastische Ausweichbewegung um diese Achse bei nichtabstreifbaren Körpern an dem Gurtband gelagert ist, wobei jedes Abstreifelement zur selbsttätigen Einhaltung der Parallelität der Abstreiflamelle zu dem Gurtband eine Lagerung zum Verschwenken um eine Achse aufweist.

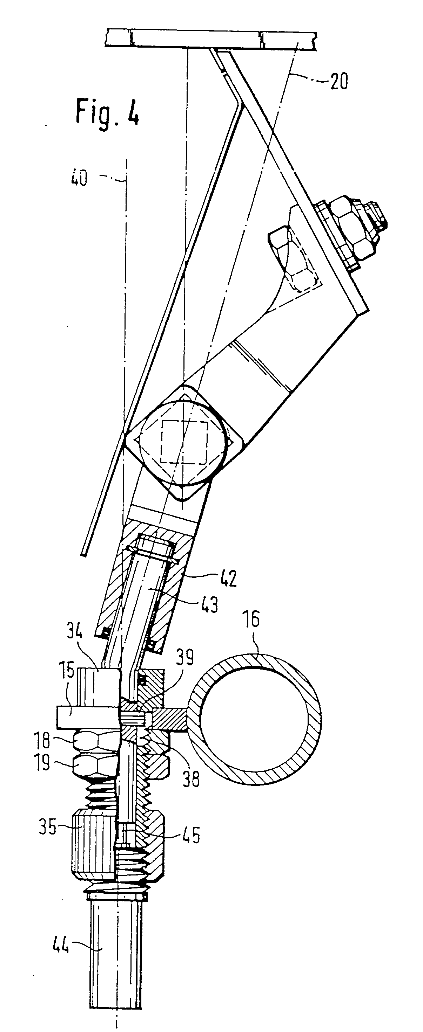

Eine derartige Abstreifvorrichtung ist aus der Druckschrift EP-A-0090985 bekannt. Jedes Abstreifelement ist mit Hilfe einer Doppelschelle gehalten, so daß als Fuß ein parallel zur Laufrichtung des Gurtbandes angeordnetes Rohr vorhanden ist. Eine Verschwenkung des Fusses um die Mittelachse dieses Rohres verändert die Parallelität der Abstreiflamelle zu dem Gurtband. Bei der selbsttätigen Ausführungsform dieser Abstreifvorrichtung (siehe Fig. 4 bis 6) befindet sich zwischen dem Fuß und diesem Rohr eine Gummitorsionsfeder, deren Nullage so eingestellt ist, daß gerade Parallelität zwischen der Abstreiflamelle und dem Gurtband vorherrscht. Wenn sich das Gurtband in der Neigung verändert, wird auf die eine Ecke der Abstreiflamelle ein Druck ausgeübt, der sich als Verdrehung der Gummitorsionsfeder auswirkt. Dadurch gibt es eine elastische, also rückstellende, selbsttätige Einstellung der Parallelität bei sich ändernder Gurtneigung.

Es hat sich gezeigt, daß die selbsttätige Einstellung der Parallelität oftmals mit einer Beschädigung des Gurtbandes einhergeht. Aufgrund des relativ großen Abstandes der Schwenkachse von der zu reinigenden Gurtfläche bedarf es eines relativ starken Winkelausschlages des Abstreifelementes, um durch einen relativ kleinen Korrekturwinkel die Paralleltiät einzustellen bzw. nachzustellen. Wenn also ein Gurtabschnitt aufgrund von Verwerfungen oder dgl. auf die bekannte Abstreifvorrichtung zuläuft, dauert es relativ lange, bis die neue Paralleleinstellung aufgefunden ist. Bis zum Eintritt der neuen Paralleleinstellung hinterläßt die dann auf der zu reinigen den Gurtfläche laufende Ecke der Abstreiflamellen Kratzspuren, die sich bei regelmäßiger Wiederkehr zu einer Beschädigung ausweiten können. Bei sehr starken Parallelitätsschwankungen ist die Rückstellkraft der Torsionsfeder so stark, daß keine Parallelität mehr erreicht wird, sondern die Abstreiflamelle nur noch auf der Ecke läuft.

Aus der Druckschrift DE-A-32 29 116 ist eine Abstreifvorrichtung bekannt, bei der sich die Abstreiflamelle selbsttätig und frei drehbar zur Einhaltung der Parallelität zu dem Gurtband einstellen kann. Diese Abstreifvorrichtung betrifft jedoch eine geschleppte Abstreiflamelle, die nicht schälend gegen die Gurtlaufrichtung angestellt ist, sondern entgegengesetzt nach Art einer Schleppe über die zu reinigende Gurtfläche gezogen wird. Aus diesem Grunde kann es hingenommen werden, daß bei der Einstellung der Parallelität diejenige Kante, die bei einer Parallelitätskorrektur abwärts gedrückt wird, sich gegen die Laufrichtung des Gurtes bewegt. Wegen des schleppenden Eingriffs kommt es zu keiner Beschädigung des Gurtbandes, allerdings ist die Reinigungswirkung einer derartigen Abstreifvorrichtung insgesamt schlechter als bei einer Vorrichtung der vorliegenden Gattung mit einer schälenden Anstellung der Abstreiflamellen.

Es ist Aufgabe der Erfindung, eine Abstreifvorrichtung der eingangs gennanten Art so abzuändern, daß die Einstellung bzw. Nachstellung jedes Abstreifelementes bzgl. der Parallelität der Abstreiflamelle schneller und vollständiger erfolgt und so eine Beschädigung der zu reinigenden Gurtfläche vermieden wird.

Diese Aufgabe wird gemäß der Erfindung dadurch gelöst, daß die Lagerung so angeordnet ist, daß im montierten, betriebsbereiten Zustand die Achse auf der dem Abstreifelement zugewandten Seite des Gurtbandes mit dem zulaufenden Gurtabschnitt einen Winkel $\alpha$ von weniger als 90° bildet, also die Gurtebene schneidet, und daß die Lagerung eine freischwenkbare, federlose Lagerung ist.

Der angegebene Winkel $\alpha$ kann annähernd jeden Wert zwischen 0 und 90° annehmen. Zum besseren Verständnis der Lage des Winkels $\alpha$ sollte man sich den Winkel als konkretes Gebilde mit zwei Schenkeln vorstellen, wobei der eine Schenkel mit der Unterseite des Gurtes zusammenfällt und der andere Schenkel auf der genannten Achse liegt. Aufgrund der Schrägstellung dieser Achse führt eine Schwenkbewegung des Abstreifelementes in der einen oder anderen Richtung zu einer Art Schaukelbewegung der Abstreifkante der Abstreiflamelle, so daß sich mit zunehmender Verschwenkung aus der Mittellage heraus eine Ecke der Abstreifkante gegenüber der anderen absenkt bzw. anhebt. Aufgrund dieser Erscheinung stellt sich die gewünschte Parallelität zwischen der Abstreifkante der Abstreiflamelle und der Gurtoberfläche selbsttätig ein.

Die schwenkbare Lagerung überläßt man sich selbst, wobei ggf. Grenzen mit Hilfe von Anschlägen vorgegeben werden, damit das Abstreifelement nicht beim Loslaufen des Gurtbandes aus dem Stillstand unkontrolliert ausgerichet ist. Es sei dabei angenommen, daß der Gurt einen ausgereckten Abschnitt aufweist, der sich als Wölbung und damit als Veränderung der bis dahin geforderten Parallelität auswirkt. Als Regeleingang der Selbsteinstellung ergibt sich dann zunächst ein Druck auf die eine Ecke der Schneidkante durch den Gurt, während die gegenüberliegende Ecke entlastet wird. Als Folge einer Drehung des Abstreifelementes um die Schwenkachse weicht daraufhin die belastete Ecke nach unten - wegen der Schrägstellung zur Gurtoberfläche - und in Gurtlaufrichtung aus, während die entlastete Ecke aufwärts und gegen die Gurtlaufrichtung bewegt wird. Diese Bewegung ist abgeschlossen, wenn beide Ecken wieder mit derselben Belastung an der Gurtoberfläche anliegen.

Je nach Stärke der Neigung, also je nach Größe des Winkels $\alpha$, ist die Änderung der Parallelität heftig oder weniger heftig. Sie ist so zu wählen, daß zwischen den verwendeten Reibpartnern, also zwischen der Lamellenkante und dem Gurtmaterial eine stabile Anlage zustande kommt und sich keine Pendelschwingungen einstellen. Hier müssen ggf. Versuche vorgenommen werden, um die optimale Stellung herbeizuführen. Zwar werden die Lamellenkanten grundsätzlich aus einem sehr verschleißfesten Material hergestellt, es sind aber auch Bauformen sowohl in gehärtetem Stahl als auch in Hartmetall üblich, die Gurtmaterialien der unterschiedlichsten Qualitäten reinigen.

Zur Lage der Schwenkachse bei einer Abstreifvorrichtung gemäß der Erfindung sei nochmals gesagt, daß in der Seitenansicht die bis zu der zu reinigenden Gurtoberfläche verlängert gedachte Achse quasi den Gurt als Schleppe berührt, also mit der Gurtlaufrichtung ausgelenkt ist. Dabei spielt es keine Rolle, ob die Achse vor oder hinter der Schneidkante der Abstreiflamelle die Gurtebene schneidet, es kommt nur auf die richtige Neigung an. An ausgeführten Anlagen kann die Schwenkachse die Mittelachse der Torsionsfeder durchqueren oder vor und hinter dieser Mittelachse liegen. Auch ist unerheblich, ob die Schwenkachse im Bereich des Abstreifkörpers, also z.B. zwischen Abstreifkörper und Lamelle verwirklicht ist, oder als Schwenkverbindung zwischen dem Fuß des Abstreifelementes und dem Abstreifkörper, also unterhalb des Torsionsfedergelenkes gebildet wird. Selbstverständlich kommt auch eine gelenkige Verbindung zwischen dem Fuß und dem Bauteil in Frage, das an dem Träger befestigt ist. Es kommt stets auf die richtige Neigung der Schwenkachse an, die an ausgeführten Beispielen einen Winkel $\alpha$ von 750 bis 45° einnimmt. Dieser Wert kann selbstverständlich in extremen Anwendungsfällen auch noch höher oder niedriger liegen.

Als Schwenkverbindung bietet sich insbesondere eine Hülse und ein Bolzen an, wobei unerheblich ist, welchem Bauteil die Hülse und welchem Bauteil der Bolzen zugeordnet ist. Abweichend davon können auch Wälzlagerungen vorgesehen sein, was immer dann der Fall ist, wenn eine besonders feinfühlige Einstellung gewünscht ist, weil z.B. die Schwenkachse relativ steil steht ( $\alpha$ in der Nähe von 90°) oder die erwarteten Schwankungen nur kurzzeitig auftreten, also eine besonders schnelle Neuausrichtung der Parallelität erforderlich ist.

Oftmals ist auch eine individuelle Höheneinstellung des Abstreifelementes gegenüber der Gurtoberfläche wünschenswert. Bei einfachen Ausführungsbeispielen kann die Höhenverstellung durch das Lösen eines mit zwei Muttern gesicherten Bolzens durch Auf- und Abschrauben der Muttern entlang des Bolzens erreicht werden. Dabei erfolgt die Höheneinstellung entlang der Achse, um die auch die Verschwenkung zur Einstellung der Parallelität erfolgt. Diese Höhenverstellung unter einem leichten Winkel gegenüber einem auf die Gurtoberfläche gefällten Lot ist unschädlich. Es versteht sich von selbst, daß diese Höheneinstellung unabhängig von der Parallelitätseinstellung erfolgt und sich nach den auftretenden Betriebsbedingungen richtet.

Es ist besonders zweckmäßig, die lineare Verstellung zur Einstellung der Höhenlage bzw. des Anpreßdruckes der Abstreiflamelle an die Gurtoberfläche federnd auszubilden, so daß sich ein möglicher Verschleiß an den Abstreifelementen selbsttätig korrigiert. Zur Verwirklichung dieses Prinzips ruht ein mit dem Abstreifelement verbundenes Bauteil, insbesondere ein als Bolzen ausgebildeter Fuß auf einer Gummifeder, einer Stahlfeder oder auf einer gebauten oder gekapselten Gasfeder . Einzelheiten derartiger Beispiele werden im Zusammenhang mit der Figurenbeschreibung weiter unten noch näher erläutert. Wichtig ist die Feststellung, daß die Achse der Verschieberichtung für die Höheneinstellung im wesentlichen Vertikal zur Gurtoberfläche verläuft, also nicht die Neigung der Schwenkachse aufweist, die im Zusammenhang mit der Paralleleinstellung beschrieben worden ist.

Der Grund dafür, daß die Achse der Verschieberichtung zur Höheneinstellung annähernd vertikal zur Gurtoberfläche verlaufen muß, liegt darin, daß eine Schrägstellung im Sinne der Schwenkachse zur Parallelitätseinstellung zu einer Kraftkomponente führte, die das Bestreben hätte, das Abstreifelement anzuheben. Diese Kraftkomponente würde eine zu starke Höhenlage bzw. Anpresskraft bewirken und vor allen Dingen das Zurücksinken des Abstreifelementes in die Ausgangslage verhindern, wenn infolge einer hartnäckigen Verunreinigung bzw. infolge von vorstehenden Teilen beispielsweise im Bereich von Fügestellen an der Gurtoberfläche das Abstreifelement heftig gegen die Wirkung der Torsionsfeder ausgelenkt wird, so daß es vorübergehend von der Gurtoberfläche abhebt. In dieser kurzen Periode des Abhebens hebt die Feder das Abstreifelement insgesamt an. Wenn es danach wieder zur Anlage der Abstreiflamelle an der Gurtoberfläche kommt, wird bei richtiger Ausrichtung der Achse die Höheneinstellung das Abstreifelement wieder in seine Sollage gedrückt, während bei einer Schrägstellung diese erhöhte Position aufgrund der genannten Kraftkomponente weitgehend beibehalten würde.

Es ist in bestimmten Fällen zweckmäßig, das Abstreifelement um eine Achse drehbar zu gestalten, die im wesentlichen vertikal zur Gurtoberfläche verläuft. Sofern eine Höheneinstellung entlang einer Achse vorgesehen ist, kann die Drehachse mit der Achse für die Höhenverstellung zusammenfallen. Die Drehung des gesamten Abstreifelementes um die Drehachse wird bei einem Reversierbetrieb eingesetzt, wenn also das Gurtband in beiden Laufrichtungen benutzt wird. Die freie Drehbarkeit des Abstreifelementes führt nach dem Stillstand und dem Neuanlauf des Bandes in entgegengesetzter Richtung dazu, daß sich das Abstreifelement über kurz oder lang um 180° um die genannte zweite Achse dreht, so daß im Reversierbetrieb ebenfalls eine Abstreifwirkung vorhanden ist. Für diese Anwendungsfälle ist davon auszugehen, daß an beiden Abwurfenden entsprechende Abstreifvorrichtung angeordnet sind, die identisch gestaltet sein können.

Insbesondere bei sehr schnellaufenden Gurtbändern können die Ausweichbewegungen der Abstreifelemente sehr heftig sein, so daß sie kurzfristig von der Bandoberfläche abheben und sich anschließend wieder an die Gurtoberfläche anlegen. In diesem Augenblicken ist jede Feder zur Korrektur des Verschleißes ohne Gegenkraft mit der Folge, daß das Abstreifelement um einen bestimmten Betrag angehoben wird. Eine derartige Anhebung kann unerwünscht sein, da dann das Abstreifelement zunächst in einer ungünstigen Anstellung arbeitet. Zur Vermeidung der Anhebung schlägt die Erfindung in Weiterbildung eine hydraulische Dämpfung der Feder vor, die besonders leicht in Verbindung mit einer gekapselten Gasfeder verwirklicht werden kann. Es kommt dann lediglich zu sehr langsamen Lageänderungen entlang der Verstellachse, die jedem Verschleiß zu folgen vermögen, jedoch Bewegungen so gut wie auslassen, die infolge einer kurzfristigen Gegenkraftunterbrechung möglich wären. Ähnlich gute Federungs- und Dämpfungseigenschaften ergeben sich, wenn als Feder eine Kolben-Zylinder-Einheit verwendet wird, bei der das Hydraulikmedium von einem Gaspolster beaufschlagt ist. Aufgrund der hydraulischen Führung ist annähernd jede Dämpfungscharakteristik frei wählbar. Derartige hydropneumatisch geführte und verstellbare Abstreifelemente sind allerdings aufgrund der hohen Kosten nur für Sonderaufgaben geeignet.

Zur Verwirklichung der Schrägstellung der Achse für die Einstellung der Parallelität ist es besonders zweckmäßig, einen Träger als Rohr vorzusehen, an dem an vorgegebenen Anständen annähernd unter der gewünschten Neigung seitlich Laschen mit je einer Bohrung beispielsweise angeschweißt sind, an denen dann die jeweilige Führung für die Schwenkbefestigung der Abstreifelemente angebracht wird. Die rohrartige Ausbildung des Trägers ermöglicht bei einer seitlichen Einklemmung in entsprechenden Haltern eine Verdrehung um die Längsachse, womit ggf. die Neigung der Verstellachse korrigiert bzw. eingestellt werden kann. Eine mögliche Abstandsveränderung zur Unterseite des Gurtbandes kann sehr leicht dadurch ausgeglichen werden, daß die Halter zur Halterung der Rohrenden entsprechend verstellt werden, was in der Regel sehr leicht möglich ist, da diese Halter an Gewindespindeln gehalten sind, die an der Förderbandstruktur verankert sind. In dieser Weise ist eine individuelle Einstellung der Achsenneigung möglich.

Abweichend davon kann statt der Lasche in den rohrartigen Träger jeweils eine Hülse beispielsweise eingeschweißt sein, die denselben Zweck erfüllt, lediglich müssen dann die die Hülse durchdringenden Gewindebolzen bzw. Gewindehülsen etwas länger gestaltet sein.

Schließlich kann für die Abstreifelemente eines einzigen Trägers eine gemeinsame Feder vorgesehen sein, in Form einer Schlauchfeder, die innerhalb des rohrartigen Trägers liegt, wenn die einzelnen Abstreifelemente so geführt sind, daß die freien Enden der Füße in das Innere des rohrartigen Trägers weisen und auf der Feder ruhen. Durch eine entsprechende Druckbelastung kann die Härte der Federwirkung bestimmt werden. Abweichend davon kann jeder Fuß in einer im wesentlichen gasdichten Führung als Kolben verwendet werden, der von dem Rohrträger weggedrängt wird, wenn das Innere des Rohres mit einem entsprechenden Gasdruck beaufschlagt wird. Nachfolgend werden Ausführungsbeispiele der Erfindung, die in der Zeichnung dargestellt sind, näher erläutert;

in der Zeichnung zeigen:

Fig. 1    eine Seitenansicht eines Abstreifelementes mit erfindungsgemäßer Verschwenkung um eine schräggestellte Achse in einem ersten Ausführungsbeispiel,

Figur 2    eine Seitenansicht eines weiteren Ausführungsbeispiels eines Abstreifelementes gemäß der Erfindung mit selbsttätiger Paralleleinstellung und selbsttätiger Höhennachstellung und unter Benutzung einer Gummifeder,

Figur 3    eine Ansicht gemäß der Figur 2 als Teilansicht zur Verdeutlichung der Verwendungsmöglichkeit einer Schraubenfeder statt der Gummifeder,

Figur 4    eine Ansicht gemäß der Figur 2 zur Verdeutlichung der Verwendung eines Pneumatikzylinders oder Hydraulikzylinders statt einer elastischen Feder,

Figur 5    eine Ansicht eines weiteren Ausführungsbeispiels der Erfindung mit einer pneumatischen Feder unter Einbeziehung eines rohrförmigen Trägers,

Figur 6    eine Ansicht gemäß der Figur 5 zur Verdeutlichung einer Variante einer Gasfeder,

Figur 7    eine Ansicht gemäß der Figur 5 zur Verdeutlichung eines weiteren Ausführungsbeispiels für eine Gasfeder,

Figur 8    eine Vorderansicht des Ausführungsbeispiels gemäß der Figur 2,

Figur 9    eine Seitenansicht eines weiteren Ausführungsbeispiels gemäß der Erfindung mit selbsttätiger Paralleleinstellung und durch Gasdruck bewirkter Höheneinstellung,

Figur 10    ein weiteres Ausführungsbeispiel der Erfindung ähnlich dem gemäß der Figur 9, jedoch unter Verwendung einer Schraubenfeder aus Stahl,

Figur 11    eine Ansicht gemäß der Figur 10 als Ausschnitt zur Verdeutlichung einer Variante ohne Höheneinstellung,

Figur 12    eine Seitenansicht eines weiteren Ausführungsbeispiels der Erfindung mit einem Abstreifblatt als Reinigungsorgan bei selbsttätiger Parallel- und Höheneinstellung,

Figur 13    eine Seitenansicht einer Abstreifvorrichtung mit zwei Reihen von Abstreifelementen und

Figur 14    eine Seitenansicht einer Einrichtung zur Aufnahme der in der Figur 13 dargestellten Teilvorrichtung unterhalb eines Förderbandes mit einem an Lenkern geführten Halter.

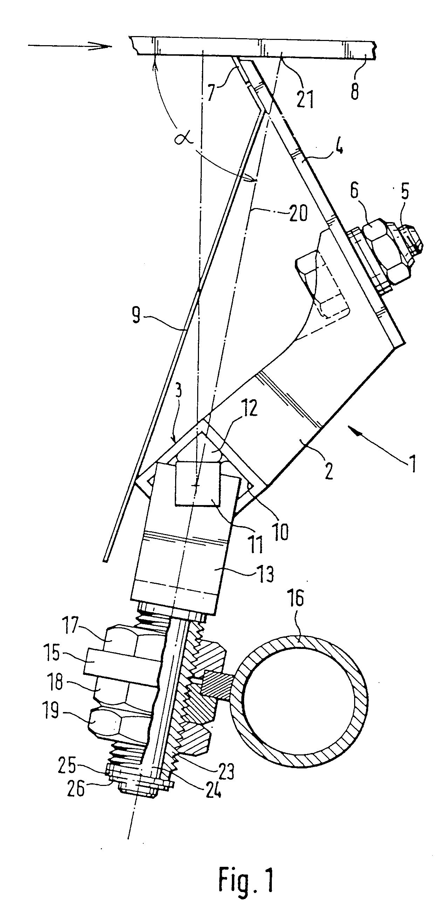

In der Figur 1 ist der wesentliche Bestandteil einer Abstreifvorrichtung gemäß der Erfindung in Form eines Abstreifelementes 1 wiedergegeben, von dem oberhalb und unterhalb der Bildebene in der Regel mehrere Exemplare nebeneinander angordnet sind. Jedes Abstreifelement 1 deckt eine Breite von ca. 12 cm ab, so daß beispielsweise bei einer Gurtbreite von 1 m acht derartige Abstreifelemente 1 nebeneinander angeordnet sind. An einem Abstreifkörper 2 befindet sich am unteren Ende eine Torsionsfeder 3, die sowohl eine Federwirkung als auch eine Führung einer Schwenkbewegung um deren Mittelachse bewirkt. An dem anderen Ende des Abstreifkörpers 2 ist mit Hilfe eines Bolzens 5 und einer Stoppmutter 6 eine Abstreiflamelle 4 befestigt, die an der an dem Gurt 8 anliegenden Kante mit einer Hartmetallippe 7 ausgestattet ist. In der Figur 1 ist die Funktionslage wiedergegeben, in der die Hartmetallippe 7 die Oberfläche des Gurtes 8 abschält. Der Gurt 8 läuft in der mit dem Pfeil bezeichneten Richtung, wobei die Schälkräfte von der Torsionsfeder 3 aufgebracht werden. Bei einer nicht abschälbaren Verunreinigung oder beispielsweise bei dem Passieren einer Gurtfügestelle vermag die aus dem Abstreifkörper 2 und der Abstreiflamelle 4 gebildete Einheit gegen die Wirkung der Torsionsfeder 3 auszuweichen, so daß Beschädigungen sowohl an dem Gurt 8 als auch an dem Abstreifelement 1 so gut wie ausgeschlossen sind.

Das abgestreifte Gut fällt von der Hartmetallippe 7 auf einen aus Kunststoff bestehenden Latz 9, der dafür sorgt, daß die darunterliegenden Bauteile nicht mit dem abgestreiften Gut überschüttet werden. Bei entsprechender Konsistenz kann nämlich das abgestreifte Gut mit der Zeit verhärten, so daß die Zugänglichkeit dieser Bauteile ernsthaft gefährdet werden kann, wenn nicht Vorsorge durch einen entsprechenden Latz 9 getroffen wird.

Die Torsionsfeder 3 wird von vier Gummikissen 12 gebildet, die in den Ecken eines vierkantigen Gehäuses 10 untergebracht sind. Das Zentrum des Gehäuses 10 wird von einem Vierkant 11 ausgefüllt, der zusammen mit dem Gehäuse 10 jedem Gummikissen 12 eine im wesentlichen dreieckförmige Gestalt aufzwingt. An dem Vierkant 13 wird dann stets ein Fuß beispielsweise in Form eines L-förmigen Winkels 13 oder sonstige Elemente zur Halterung des Abstreifelementes 1 angebracht.

In dem vorliegenden Fall ist das Abstreifelement an dem Winkel 13 gehalten, an dessen unterem, freien Schenkel ein Bolzen 24 verankert ist. Diese steckt in einer Gewindehülse 23, die durch zwei profilierte Muttern 17 und 18, gesichert durch eine Kontermutter 19, an einem Steg 15 befestigt ist, der seitlich an einem als Rohr 16 ausgebildeten Träger angeschweißt ist. Die Mittelachse 20 des Bolzens 24 und damit der gesamte über dem Bolzen 24 gehaltene Aufbau ist gegenüber der Gurtunterseite um einen Winkel α von 75° geneigt angeordnet. Die Verlängerung der Mittelachse 20 trifft deutlich hinter der Hartmetallippe 7 in Schrägstellung auf die Gurtoberfläche auf, so daß bei einer Schwenkbewegung des Abstreifelementes 1 um die Achse 20 die Parallelität zwischen der Hartmetallippe 7 und der benachbarten Gurtoberfläche verlorengeht bzw. sich ändert, was zur Einstellung der Parallelität ausgenutzt wird.

Nach Lösen der Kontermutter 19 und nach Lockern der beiden profilierten Muttern 17 und 18 kann das gesamte Abstreifelement entlang der Achse 20 durch Niederschrauben bzw. Hochschrauben der beiden Muttern 17 und 18 verändert werden.

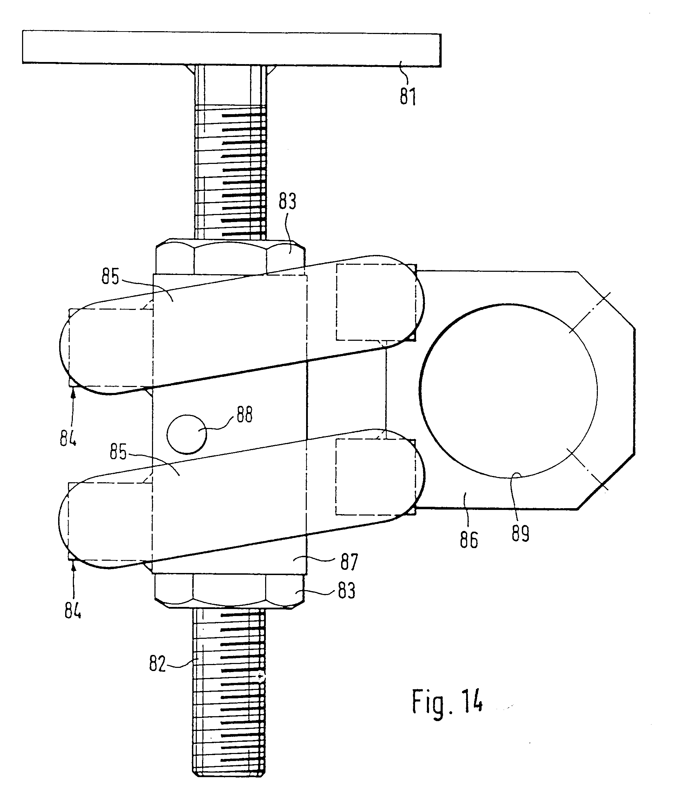

Das als Träger dienende Rohr 16 ist von im Zusammenhang mit der Figur 14 erläuterten Haltern seitlich gestützt, und diese sind wiederum an sogenannten Systemträgern befestigt, also an vertikal vom Fördergerüst herabhängenden Gewindespindeln zu beiden Seiten des Förderbandes. Mit Hilfe der Halter ist sowohl eine grobe Höhenverstellung des gesamten Rohres 16, dessen parallel Einstellung zur Gurtbandunterseite und auch in engen Grenzen eine Veränderung des Winkels α möglich. Das Rohr 16 kann also in den Haltern um sich selbst gedreht und festgespannt werden, so daß Parallelität und Abstand des Rohres 16 zum Gurt 8 einjustiert werden können. In jedem Fall ergibt sich ein Winkel α, dessen Scheitelpunkt 21 auf der Gurtoberfläche einerseits und auf der Achse 20 andererseits liegt und dessen Größe kleiner als 90° ist, insbesondere etwa zwischen 75° und 45° liegt.

Die freie Verschwenkbarkeit des Abstreifelementes 1 gegenüber dem Träger 16 erfolgt durch die Gewindehülse 23 und den Bolzen 24. Der an der einen Seite mit einem Bund an der Gewindehülse 23 anliegende Bolzen 24 ist an der anderen Seite mit Hilfe einer Unterlegscheibe 25 und eines Wellensicherungsringes 26 axial gesichert, so daß die Verstellung entlang der Achse 20 mit Hilfe der Muttern 18 und 19 vorgenommen werden muß, die Verstellung um die Achse 20 jedoch selbsttätig erfolgt. Die Möglichkeiten zur Lageveränderung des als Träger dienenden Rohres 16 ist bereits beschreiben worden.

Bei der Einjustierung des in der Figur 1 dargestellten Abstreifelementes 1 wird mit Hilfe der drei Muttern 17, 18 und 19 im wesentlichen die Vorspannung eingestellt, mit der die Abstreiflamelle 4 mit ihrer Hartmetallippe 7 an dem Gurt 8 anliegt. Die Parallelität der Abstreiflamelle 4 zu der Gurtoberfläche stellt sich selbsttätig ein, und zwar durch eine Schwenkbewegung um die Achse 20. Es ist ohne weiteres ersichtlich, daß bei einer Schwenkbewegung der an dem Bolzen 24 gehaltenen Einheit der eine Kantenbereich der Hartmetallippe 7 sich von dem Gurtband löst, während der andere Kantenbereich tiefer in den Gurt 8 eindringen will, weil die Ortskurve der Bewegung dieser beiden Punkte, nämlich ein Kreis um die Achse 20, die Gurtoberfläche durchdringt. Die sich ergebende höhere Schälkraft an der sich hebenden Seite der Hartmetallippe 7 bewirkt eine Rückschwenkung, bis wiederum ein Gleichgewicht von Schälkräften über die gesamte Länge der Hartmetallippe 7 vorherrscht. In dieser Weise stellt sich das Abstreifelement 1 selbsttätig auch an vorübergehende Gurtdeformationen ein, die im Verlauf eines Umlaufs auf die Abstreifvorrichtung treffen.

Die einzige Voraussetzung für die selbsttätige Einstellung ist ein gewisser seitlicher Raum neben jeder Abstreiflamelle 4, damit ein begrenzter Schwenkweg zur Verfügung steht. Diese Voraussetzung führt im Ergebnis dazu, daß für eine sorgfältige Reinigung des Gurtbandes zwei Reihen von Abstreifelementes vorgesehen werden, die zueinander auf Lücke stehen und so zueinander einen Abstand aufweisen, der in etwa ihrer Breite entspricht.

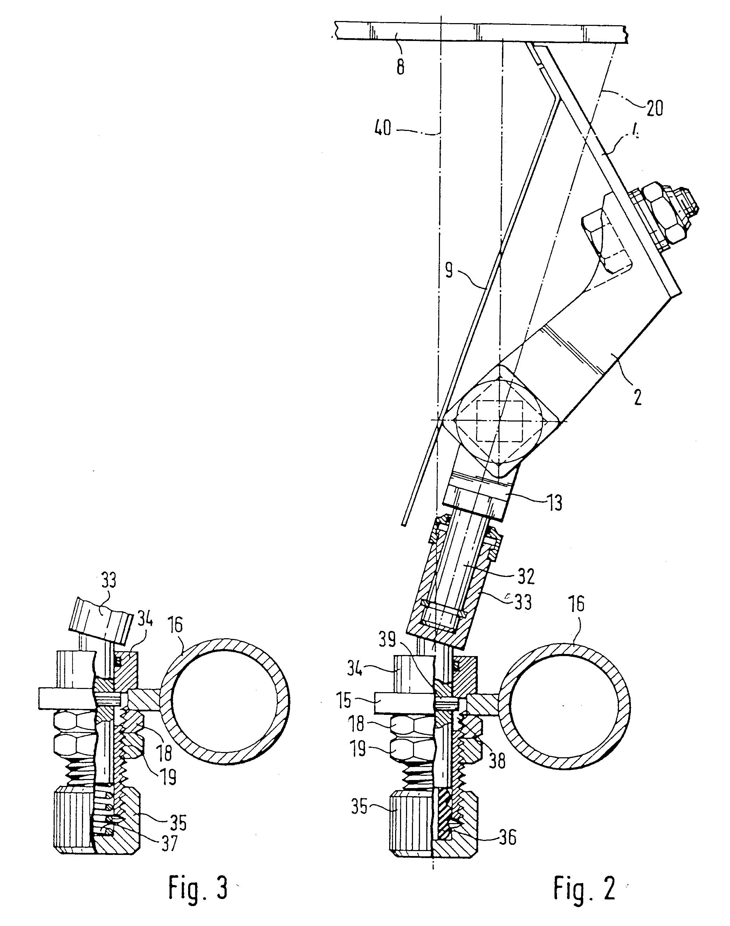

Bei den Ausführungsbeispielen gemäß den Figuren 2 und 3 ist neben der selbsteinstellenden Parallelität der Abstreiflamelle 4 zu dem Gurt 8 auch eine selbsttätige Nachstellung der Vorspannung, also eine federnde Verschiebung entlang einer zweiten Achse 40 vorhanden. Da die Verschwenkung zur Paralleleinstellung um die schrägstehende Achse 20 erfolgen muß, jedoch die Höheneinstellung bzw. die Nachstellung der Vorspannung um eine im wesentlichen vertikal zur Gurtoberfläche verlaufenden Achse 40 erfolgen muß, sind beide Funktionen getrennt, so daß zwei Lagerungen unabhängig voneinander für beide Achse 20 und 40 vorhanden sind.

Am unteren Ende des Winkels 13 befindet sich ein Gelenkbolzen 32, der drehbar innerhalb einer Gelenkhülse 33 aufgenommen ist. Ein Sprengring verhindert eine axiale Bewegung, während eine Dichtmanschette für die notwendige Abdichtung dieses Gelenkes sorgt. Mit seiner Hilfe wird die Schwenkbewegung, also die Paralleleinjustierung um die Achse 20 vorgenommen. Das untere Ende der Gelenkhülse 33 wird durch einen Bolzen gebildet, der innerhalb einer Bundbüchse 34 verschieblich gelagert ist. Die Bundbüchse trägt seitlich ein Langloch 38, in das ein in den Bolzenteil eingetriebener Stift 39 eingreift. Das untere Ende des Bolzens ruht auf einer Gummifeder 36 (Figur 2) bzw. auf einer Schraubenfeder 37 (Figur 3), so daß die an der Gelenkhülse 33 angebrachte Einheit vertikal entlang der Achse 40 verschieblich ist und infolge der Federn 36 bzw. 35 aufwärts gedrückt wird.

In den Figuren 2 und 3 ist die höchste Lage wiedergegeben, in der der Stift 39 am oberen Ende des Langloches 38 anstößt. Um eine weitere Nachstellmöglichkeit zu schaffen, müßte nach dem Lösen der Kontermutter 19 sowie der Mutter 18 unter den Bund der Bundbüchse 34 eine Scheibe oder müssen mehrere Scheiben untergelegt werden, so daß die gesamte Einheit gegenüber dem Steg 15 höher angeordnet ist. Im übrigen tritt diese Funktionslage immer dann ein, wenn die auf dem Abstreifelement 1 ruhende Last aus dem Gurt 8 vorübergehend sehr schwach ist, bzw. sogar unterbrochen ist, was bei einem stark ausgelegten Abstreifkörper 2 und bei starken Deformierungen des Gurtes der Fall ist. Die Vorspannung der Gummifeder 36 bzw. der Schraubenfeder 35 kann durch unterschiedlich weites Einschrauben der Überwurfmutter 35 eingestellt werden. In der Regel wird jedoch die Überwurfmutter 37 bis zu ihrem Anschlag eingeschraubt, in der sich die Sollvorspannung einstellt.

Bei dem Ausführungsbeispiel gemäß der Figur 4 ist eine der Federn 36 bzw. 37 durch eine gekapselte Gasfeder 44 ersetzt, deren Kolbenstange 45 das untere Ende des in der Gelenkhülse 42 gehaltenen Bolzens 43 abstützt. Im übrigen sind beide Ausführungsbeispiele identisch, so daß auf die Erläuterung der allgemeinen Funktion verzichtet werden kann. Gasfedern haben gegenüber herkömmlichen Schraubenfedern oder Blockfedern aus einem Elastomer den Vorteil, daß die Federkraft über den gesamten Federweg annähernd konstant ist. Dies gilt insbesondere für kurze Federwege, die im vorliegenden Fall zur Anwendung kommen. Darüber hinaus kann die Feder hydraulisch oder durch eine entsprechende Ölfüllung der Gasfeder gedämpft sein, was im Zusammenhang mit der erfindungsgemäßen Abstreifvorrichtung besondere Vorteile hat.

Bei einer starken Auslenkung des Abstreifelementes 1 insbesondere bei sehr schnellaufenden Gurten kommt es für Sekundenbruchteile zu einer Unterbrechung der der Federkraft entgegenwirkenden Anlagekraft, da die Abstreiflamelle 4 von dem Gurt 8 abgehoben wird. Für diese kurze Zeitperiode ist eine Verstellung in Richtung der Achse 40 durch den Kolben 45 der gekapselten Gasfeder 44 unerwünscht. Die hydraulische Dämpfung sorgt in diesem Fall dafür, daß nur ein zu vernachlässigender Weg in einer entsprechenden Situation an Verschiebung zurückgelegt wird, so daß das Abstreifelement nach der Wiederanlage an dem Gurt im wesentlichen seine Ausgangsstellung beibehalten hat. Selbstverständlich werden die erforderlichen Verstellwege infolge eines Verschleißes der Hartmetallippe 7 ohne Verlust durch die Dämpfung voll durch die Feder bewirkt, so daß ideale Voraussetzungen für eine Nachstellung des Verschleißes, jedoch eine unterdrückte Nachstellung bei kurzzeitigem Abheben des Abstreifelementes 1 von dem Gurt 8 infolge der hydraulischen Dämpfung vorhanden sind.

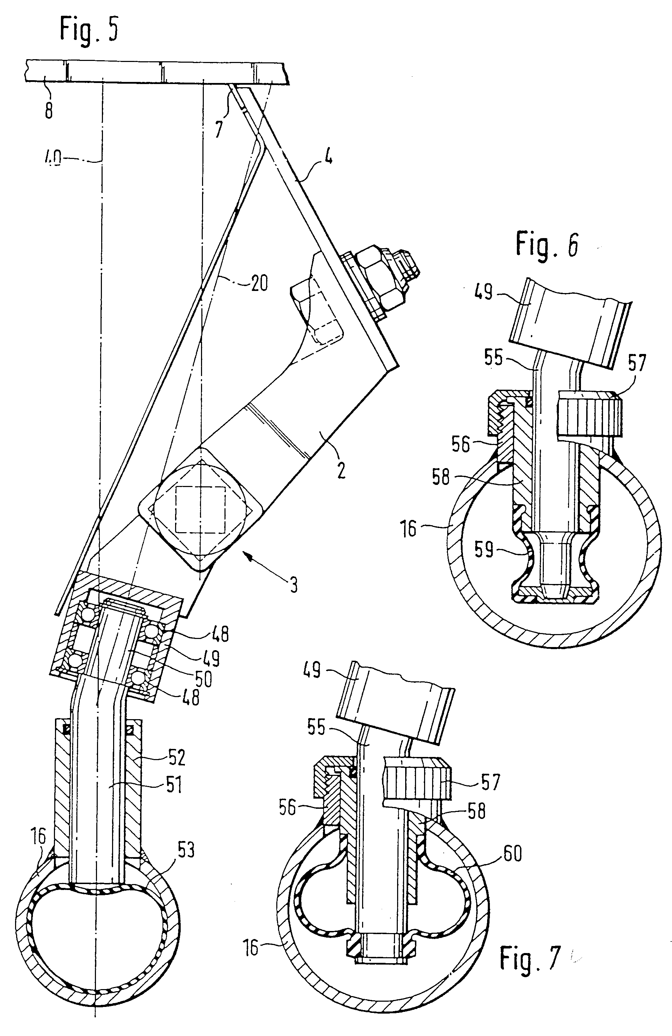

Die in den Figuren 5, 6 und 7 wiedergegebenen Ausführungsbeispiele unterscheiden sich jeweils bezüglich der federnden Verschleißnachstellung; die selbsttätige Paralleleinjustierung der Abstreiflamelle 4 gegenüber dem Gurt 8 erfolgt in allen Fällen durch eine Schwenkbewegung um die Achse 20, wobei die Lagerung in besonderer Weise gestaltet ist.

Unterhalb der Torsionsfeder 3 ist ein Lagergehäuse 49 angeordnet, in dem sich drei Wälzlager, insbesondere zwei Kugellager 48 befinden. Mit ihrer Hilfe wird drehbar ein Schaft 50 gelagert, dessen unteres Ende als Tragbolzen 51 ausgebildet ist. Mit Hilfe von Sicherungsringen ist die in dieser Weise gebildete Lagerung gegen eine unbeabsichtigte Demontage gesichert. Im Gegensatz zu den bisher vorgestellten Ausführungsbeispielen verläuft die Mittelachse 40 für die Schwenkbewegung des Abstreifelementes 1 nicht durch die Mittelachse der Torsionsfeder, was nämlich für die Funktion ohne Belang ist. Durch die besondere Ausgestaltung wird der Berührpunkt zwischen der Hartmetalllippe 7 und dem Durchstoßpunkt der Mittelachse 40 des Tragbolzens 51 besonders groß, so daß der in einer Hülse 52 schwenkbar und in Achsrichtung verschiebbare Tragbolzen 51 besonders stabil in der dargestellten Schlepplage gehalten wird.

Diese stabile Schlepplage sorgt dafür, daß allenfalls geringfügige Schwenkbewegungen um die Achse 40 im laufenden Betrieb vorkommen, die von stets starken Rückstellkräften begleitet ist. Erst wenn sich die Bandlaufrichtung umkehrt, ändern sich diese Verhältnisse drastisch: Das ganze System wird bezüglich der Achse 40 als Drehachse besonders labil, so daß das Abstreifelement um 180° um die Achse 40 herumschwenkt. Dazu genügt der kleinste asymmetrische Kraftangriff an der Abstreiflamelle 4. Die besondere Gestaltung wird also dazu ausgenutzt, daß sich das Abstreifelement bei diesem Ausführungsbeispiel bei Umkehr der Bandlaufrichtung ebenfalls um 180° herumschwenkt. Dieses Ausführungsbeispiel ist also für reversierbare Gurtbänder besonders gut geeignet.

Die Nachstellung des Verschleißes bzw. der Andruckkraft an das Gurtband 8 wird bei dem Ausführungsbeispiel gemäß der Figure 5 mit Hilfe einer Schlauchfeder 53 bewirkt, die in das als Träger dienende Rohr 16 eingelegt ist und unterschiedlich stark mit Druckluft beaufschlagt werden kann. Sie drückt auf das freie Ende des Tragbolzens 51, der folglich das Bestreben hat, sich in Axialrichtung der Achse 40 aus der Hülse 52 herauszubewegen. Gegebenenfalls kann eine Sicherung gegen das vollständige Herausgleiten angebracht sein.

Die in den Figuren 6 und 7 wiedergegebenen Ausführungsbeispiele unterscheiden sich jeweils bezüglich der federnden Verschleißnachstellung; die selbsttätige Paralleleinjustierung ist mit Hilfe des Lagergehäuses 49 lediglich angedeutet. Bei dem Ausführungsbeispiel gemäß der Figur 6 ist in das angebohrte, als Träger dienende Rohr ein Sokkel 56 eingeschweißt, in dem eine Führungshülse 58 mit Hilfe einer Überwurfmutter 57 gesichert ist. In der Führungshülse 58 kann ein Tragbolzen 55 sich drehen und in Axialrichtung gleiten.

Der untere Schaft der Führungshülse 58 sowie das herausragende Ende des Tragbolzens 55 ist über eine Druckplatte mit einem Balg 59 verbunden, wobei die Platte und der Balg zusammenvulkanisiert sind. Das Innere des als Träger dienenden Rohres 16 kann mit nicht dargestellten Mitteln unter Gasdruck gesetzt werden, so daß Gaskräfte entstehen, die den Balg 59 zusammendrücken und den Tragbolzen 55 in die Führungshülse 58 hineindrücken möchten. Diese Kräfte werden für eine Federwirkung ausgenutzt.

Diese Anordnung hat den Vorteil, daß der Tragbolzen 55 ohne weitere Manipulation aus der Führungshülse 58 entnommen werden kann. Einen derartigen Vorteil hat das Ausführungsbeispiel gemäß der Figur 7 nicht zu bieten, weil der Balg 60 wesentlich ausladender ist und mit seinem freien Ende mit Hilfe eines Sicherungsringes fest mit dem Tragbolzen 55 verbunden ist. Dennoch bietet auch dieses Ausführungsbeispiel ihre besonderen Vorteile. Die Balgfläche ist wesentlich größer, so daß für denselben Verstellweg eine wesentlich geringere Verbiegung erforderlich ist, was sich vorteilhaft auf die Lebensdauer auswirkt.

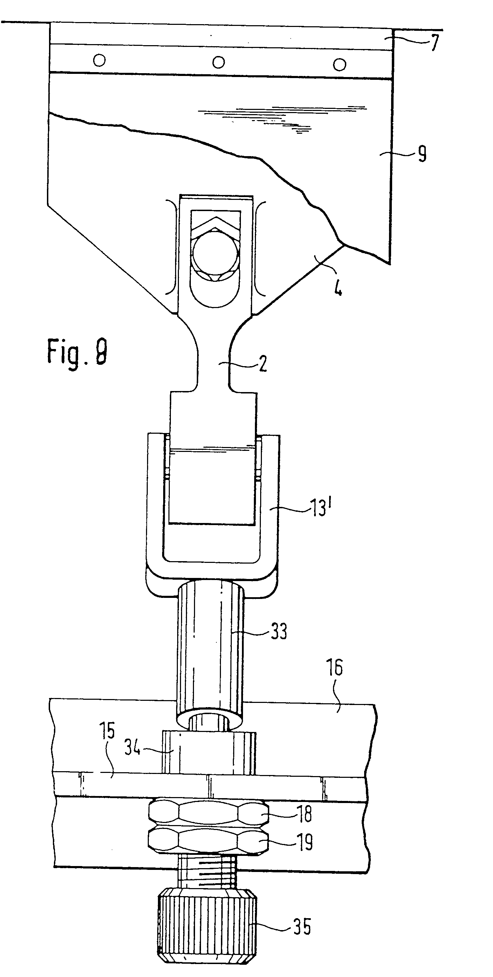

In der Figur 8 ist eine Frontansicht des Ausführungsbeispiels gemäß der Figur 2 wiedergegeben. In dieser Ansicht wird die Form der Abstreiflamelle 4 deutlich sowie die symmetrische Lage der Achse 20 bzw. 40 in seitlicher Richtung zu der Abstreiflamelle 4 und damit zu der Hartmetallippe 7. Im übrigen sind dieselben Bauteile mit denselben Bezugzeichen bezeichnet. Auch ist statt eines L-förmigen Winkels 13 eine U-förmige Konsole 13' wiedergegeben, was im Zusammenhang mit der Erfindung ohne Bedeutung ist.

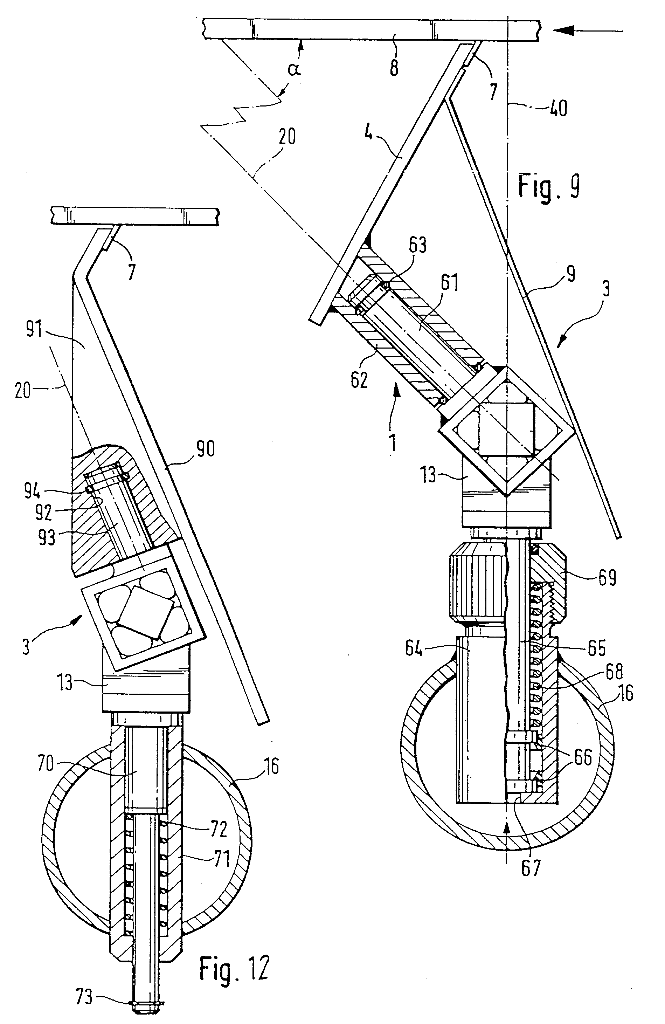

Das in der Figur 9 wiedergegebene Ausführungsbeispiel ununterscheidet sich insofern von den vorangehend beschriebenen, als die gelenkige Verbindung zur Bildung der Schwenkachse 20 für die Paralleleinjustierung oberhalb des Torsionsfedergelenkes 3 angeordnet ist, also zwischen der Abstreiflamelle 4 und einem den Abstreifkörper bildenden Gelenkbolzen 61. Dieser Gelenkbolzen 61 ist von einer an der Abstreiflamelle 4 angeschweißten Gelenkhülse 62 umgeben, wobei ein Sprengring 63 den Verbund beider Teile miteinander sicherstellt. Wegen der starken Neigung der Achse 20 kann eine seitliche Begrenzung der Schwenkbewegung der Gelenkhülse 62 um den Gelenkbolzen 61 vorgesehen sein, beispielsweise in Form eines Langlochs in der Hülse 62 und eines Stiftes (jeweils nicht dargestellt) in dem Gelenkbolzen 61.

In dieser Weise kann die Schwenkbewegung beispielsweise um 10 bis 15° zu beiden Seiten der Mittellage begrenzt werden.

Der Fuß des Abstreifelementes 1 wird wiederum durch einen Winkel 13 gebildet, an dem sich ein Kolben 65 anschließt. Dieser taucht in einen Zylinder 64 ein, der in das den Träger bildende Rohr 16 eingeschweißt ist. Im unteren Bereich des Kolbens 65 sind zwei Dichtmanschetten 66 zu erkennen, die jeweils unmittelbar neben einem Bund an dem Kolben 65 gehalten sind. Zwischen dem oberen Bund und einer auf den Zylinder 64 aufgeschraubten Überwurfmutter 69 befindet sich eine Feder 68, die den Kolben in die dargestellte Lage abwärts drückt.

Der Zylinder 64 ist an seiner Unterseite mit einer Öffnung 67 versehen, durch die ein in das Rohr 16 eingeleitetes Druckmedium auf den Kolben 65 wirken kann. Bei einem entsprechenden Druck - vorzuziehen ist Druckluft als Druckmedium - wird der Kolben 65 angehoben gegen die Wirkung der Feder 68, so daß mit dieser Anordnung die Höheneinstellung bzw. die Einstellung der Andrückkraft des Abstreifelementes 1 an die Gurtoberfläche 8 einreguliert werden kann.

Der Kolben 65 ist im übrigen frei drehbar in dem Zylinder 64 gehalten, so daß auch dieses Ausführungsbeispiel für einen Reversierbetrieb geeignet ist, bei dem sich das Abstreifelement um 180° um die Achse 40 dreht.

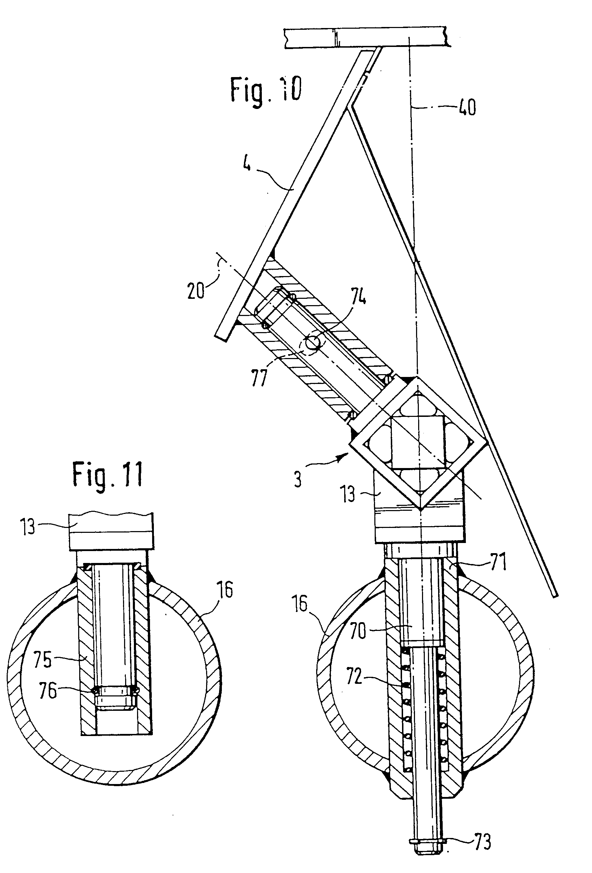

Bei dem Ausführungsbeispiel gemäß der Figur 10 ist die Konstruktion oberhalb des Winkels 13 der des Ausführungsbeispiels gemäß der Figur 9 gleich. An den Winkel 13 schließt sich nach unten ein Stufenbolzen 70 an, der in einer in das Rohr 16 eingeschweißten Buchse 71 geführt ist. Zwischen der Stufe des Stufenbolzens 70 und dem unteren Abschluß der Buchse 71 ist eine Feder 72 eingebaut, die die Tendenz hat, das Abstreifelement insgesamt anzuheben. Ein an dem unteren Ende des Stufenbolzens 70 angebrachter Sprengring 73 bildet einen Anschlag, der die Anhebbewegung in Folge der Feder 72 nach oben begrenzt.

Es ist wiederum deutlich zu erkennen, daß der Stufenbolzen 70, die Buchse 71 sowie die Feder 72 insgesamt eine Höhenverstellung und damit eine Regulierung der Andruckkraft des Abstreifelementes an die Gurtoberfläche ermöglichen, während eine Schwenkbewegung um die Achse 20 eine Einjustierung der Parallelität zwischen der Abstreiflamelle 4 und der Gurtoberfläche bewirkt. Bei diesem Ausführungsbeispiel ist eine Schwenkbegrenzung in Form eines Langloches 77 und eines Stiftes 74 angedeutet. Auch dieses Ausführungsbeispiel eignet sich für einen Reversierbetrieb mit einer Verschwenkung des gesamten Elementes um 180° bei einer Umkehr der Bandlaufrichtung.

Anhand der Figur 11 soll verdeutlicht werden, welche Variationsmöglichkeiten insgesamt bei der Vorrichtung gemäß der Erfindung bestehen. Wiederum ist die Konstruktion oberhalb des Winkels 13 identisch mit der der Figur 10. Statt einer selbsttätigen Höhenanpassung ist lediglich eine Verschwenkung eines Bolzens innerhalb einer Hülse 75 möglich, was durch einen entsprechenden Sprengring 76 bewirkt wird. Das Ausführungsbeispiel der Figur 11 gestattet also eine selbsttätige Einjustierung der Parallelität, nicht jedoch der Höheneinstellung. Andererseits ist dieses Ausführungsbeispiel wiederum für den Reversierbetrieb geeignet, da sich das gesamte Element bei Richtungsumkehr des Bandlaufes selbsttätig um 180° wendet.

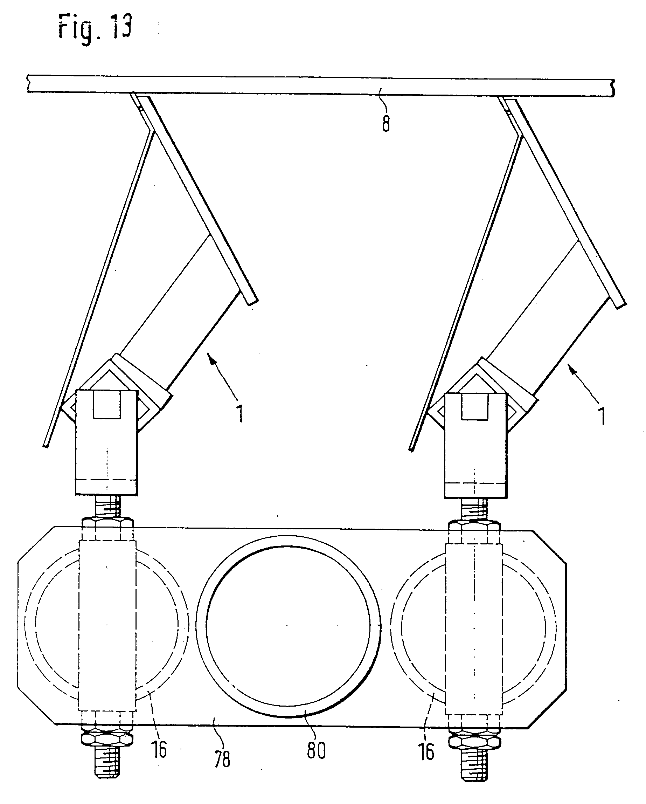

In der Figur 12 is eine Abstreiflamelle 90 borgesehen, die mit einem Rückenteil 91 als integralem Bestandteil ausgestattet ist. Innerhalb des Rückenteiles 91 befindet sich eine Bohrung 92, in der ein Gelenkbolzen 93 drehbar gelagert und mit Hilfe eines Sprengringes 94 gegen eine axiale Verschiebung gesichert ist. An dieser Stelle wird also die Schwenkbewegung zur Einjustierung der Parallelität zwischen der Hartmetallippe 7 und dem Gurtoberfläche herbeigeführt. Der Bereich unterhalb des Torsionsfedergelenkes 3 ist in derselben Weise gestaltet wie bei dem Ausführungsbeispiel gemäß der Figur 10, so daß auf eine Beschreibung an dieser Stelle verzichtet werden kann.

Die Abstreiflamelle 90 ist etwa bis zur Oberkante des Rohres 16 in der Breite der Hartmetallippe 7 abwärts geführt, so daß es die Wirkung eines Latzes hat. Das untere Ende der Abstreiflamelle 90 muß deshalb oberhalb des Rohres 16 liegen, damit beim Reversierbetrieb eine Verschwenkung über das Rohr 16 hinweg des gesamten Abstreifelementes möglich ist.

In der Figur 13 ist eine Anordnung von Abstreifelementen 1 in zwei Reihen hintereinander dargestellt. Es ist leicht vorstellbar, daß die eine Reihe gegenüber der anderen etwa um die halbe Breite eine Abstreifelementes 1 versetzt angeordnet ist, so daß die Abstreiflamellen auf Lücke stehen. In dieser Weise wird eine sehr sorgfältige Reinigung der Gurtoberfläche erreicht, wobei einige Bereiche sogar doppelt abgestreift werden, nämlich die Überlappungsbereiche.

In dem dargestellten Ausführungsbeispiel ist für jede Reihe von Abstreifelementen ein eigenes Rohr 16 vorhanden, wobei eine Verankerung jedes Abstreifelementes ähnlich erfolgt, wie bei dem Ausführungsbeispiel gemäß der Figur 1. Die Ausbildung oberhalb der Torsionsfedergelenke entspricht der Figur 10, was im einzelnen nicht weiter dargestellt ist.

Es ist ohne weiteres erkennbar, daß auch ein einziges Rohr hätte als Träger verwendet werden können, an dem dann an der Vorderseite und an der Rückseite Laschen 15 in der im Zusammenhang mit der Figur 1 beschriebenen Art angebracht worden wären. Es ist also nicht Bedingung, daß bei zwei Reihen von Abstreifelementen auch zwei Rohre verwandt werden.

Die beiden hintereinander liegenden, als Träger dienenden Rohre 16 sind an ihren Seiten durch eine Seitenplatte 78 zusammengefaßt, auf deren Außenseite ein Rohrstummel 80 angeschweißt ist. An diesem Rohrstummel erfolgt die eigentliche Halterung der aus den beiden Rohren einschließlich Zubehör bestehenden Einheit. Eine derartige Halterung ist beispielhaft in der Figur 14 wiedergegeben. Ein mit einer Bohrung versehener Halter 86 dient zur Aufnahme des Rohrstummels 80, wobei angedeutete Schrauben eine unverrückbare Klemmung des Rohrstummels 80 in der Bohrung 89 des Halters 86 gestatten.

Der Halter 86 ist mit Hilfe von zwei Lenkern 85 exakt geführt, wobei die Lenker im Bereich des Halters 86 drehbar angelenkt sind, während ihre anderen Enden als Torsionsfedergelenke 84 ausgebildet sind. Von den beiden Torsionsfedergelenken erhalten die Lenker 85 eine aufwärts gerichtete Vorspannung, so daß der Halter 86 aufwärts gegen die Gurtoberfläche bewegt wird.

Die Torsionsfedergelenke 84 sind wiederum an einem Systemträger 87 befestigt, der entlang einer Spindel 82 mit Hilfe von Muttern 83 höheneinstellbar ist. Die Spindel weist an ihrer oberen Seite eine Anschraubplatte 81 auf, die an der Struktur des Förderbandes angeschraubt wird. Diese Art der Anbringung mit Hilfe einer Anschraubplatte 81 und einer Spindel 82 ist an sich bekannt. Der Systemträger 87 trägt noch einen Anschlag 88, der die Schwenkbewegung 85 der Lenker gegen den Uhrzeigersinn begrenzt.

Bei einer Neuinstallierung bzw. bei einer Einstellung der Abstreifvorrichtung von Grund auf wird durch Einstellen der Muttern 83 der Systemträger 87 auf jeder Seite des Gurtbandes zunächst soweit an das Gurtband herangeschraubt, bis die Abstreifelemente mit einer gewissen durchschnittlichen Vorspannung an der Gurtoberfläche anliegen. Nach dem Fixieren der Systemträger 87 und nach dem Festklemmen der Rohrstummel 80 in den Haltern 86 erfolgt die individuelle Einstellung jedes Abstreifelementes zu der Gurtoberfläche in der vorangehend mehrfach beschriebenen Weise. Dabei kann auf eine Gurtbandform, die von einer ebenen Form abweicht, individuell Rücksicht genommen werden. Die Parallelität der einzelnen Abstreiflamellen zu der Gurtoberfläche stellt sich in der beschriebenen Weise selbsttätig ein, so daß damit alle Arbeiten erledigt sind.

## Patentansprüche

1. Abstreifvorrichtung für den Rücklaufbereich von Förderbändern, bestehend aus einem einstellbaren, feststehenden oder aus einem federnd gelagerten Träger (16) quer zur Laufrichtung des Gurtbandes und aus mehreren, jeweils an Füßen gehaltenen Abstreifelementen (1), die nebeneinander ggfs. in zwei Reihen an dem Träger (16) gehalten sind, und jeweils eine schälend zur Gurtbandlaufrichtung angestellte Abstreiflamelle (4) tragen, die mit Hilfe eines Abstreifkörpers (2) gehalten und durch eine Torsionsfeder zwischen jedem Fuß und diesem Abstreifkörper (2) gelenkig um eine Achse quer zur Gurtbandlaufrichtung und federnd für eine elastische Ausweichbewegung um diese Achse bei nichtabstreifbaren Körpern an dem Gurtband (8) gelagert ist, wobei jedes Abstreifelement (1) zur selbsttätigen Einhaltung der Parallelität der Abstreiflamelle (4) zu dem Gurtband (8) eine Lagerung zum Verschwenken Achse (20) aufweist, dadurch **gekennzeichnet,** daß die Lagerung (z.B. 92, 93) so angeordnet ist, daß im montierten, betriebsbereiten Zustand die Achse (20) auf der dem Abstreifelement (1) zugewandten Seite des Gurtbandes (8) mit dem zulaufenden Gurtabschnitt einen Winkel $\alpha$ von weniger als 90° bildet, also die Gurtebene schneidet, und daß die Lagerung (z.B. 92 93) eine freischwenkbare, federlose Lagerung ist.

2. Abstreifvorrichtung nach Anspruch 1, dadurch **gekennzeichnet,** daß in an sich bekannter Weise der Fußpunkt eines von der gelenkigen, die Torsionsfeder (3) enthaltenden Lagerung (10, 11, 12) auf den abgestreiften Gurtabschnitt (8) gefällten Lotes in Gurtlaufrichtung in einem Abstand zu der Berührstelle zwischen der Abstreifkante der Abstreiflamelle (4) und dem Gurtabschnitt (8) liegt, der höchstens der Hälfte des Abstandes der gelenkigen Lagerung (10, 11, 12) von dem Gurtabschnitt (8) entspricht.

3. Abstreifvorrichtung nach Anspruch 1 oder 2, dadurch **gekennzeichnet,** daß der Schwenkbereich um die Schwenkachse (20) begrenzt ist, insbesondere auf einen Schwenkwinkel von 10° bis 15° zu beiden Seiten der Mittellage.

4. Abstreifvorrichtung nach Anspruch 3, dadurch **gekennzeichnet,** daß zur Begrenzung des Schwenkwinkels Anschläge (74) vorgesehen sind.

5. Abstreifvorrichtung nach Anspruch 4, dadurch **gekennzeichnet,** daß die Anschläge durch die Wände eines Langloches (77) für einen darin bewegbaren Stift (74) gebildet sind.

6. Abstreifvorrichtung nach Anspruch 1 oder 2, dadurch **gekennzeichnet,** daß die Schwenkachse (20) durch eine Schwenkverbindung zwischen der Abstreiflamelle (4/62) und dem Abstreifkörper (68) zur ausschließlichen Verschwenkung der Abstreiflamelle (4/62) gebildet ist.

7. Abstreifvorrichtung nach Anspruch 1 oder 2, dadurch **gekennzeichnet,** daß die Schwenkachse (20) durch eine Schwenkverbindung zwischen dem Fuß (13/32) und einem an dem Träger (16) gehaltenen Bauteil gebildet ist.

8. Abstreifvorrichtung nach Anspruch 6 oder 7, dadurch **gekennzeichnet,** daß die Schwenkverbindung durch eine Bohrung (92) an dem einen Teil und einen Zapfen (93) an dem anderen Teil gebildet ist.

9. Abstreifvorrichtung nach Anspruch 6 oder 7, dadurch **gekennzeichnet,** daß die Schwenkverbindung durch eine Wälzlagerung (48) gebildet ist.

10. Abstreifvorrichtung nach einem der vorhergehenden Ansprüche, dadurch **gekennzeichnet,** daß jedes Abstreifelement um eine zweite Achse (40) frei drehbar gelagert ist, die im wesentlichen vertikal zu dem abgestreiften Gurtabschnitt (8) vor der Abstreifkante der Abstreiflamelle (90) den Gurtabschnitt (8) kreuzt.

11. Abstreifvorrichtung nach Anspruch 10, dadurch **gekennzeichnet,** daß die frei drehbare Lagerung zwischen dem Fuß (13/70) und einem an dem Träger (16) gehaltenen Bauteil (71) angeordnet ist, und daß das eine Teil als Stift und das andere Teil als Hülse ausgebildet ist.

12. Abstreifvorrichtung nach Anspruch 11, dadurch **gekennzeichnet,** daß die drehbare Lagerung in Längsrichtung der Mittelachse (40) verschieblich ausgebildet ist bzw. insgesamt in Richtung des Gurtbandes (8) verschieblich gehalten ist.

13. Abstreifvorrichtung nach Anspruch 12, dadurch **gekennzeichnet,** daß die drehbare Lagerung in der Verschieberichtung so federbelastet ist, daß das Abstreifelement (1) gegen den abgestreiften Gurtabschnitt (8) gedrückt wird.

14. Abstreifvorrichtung nach Anspruch 13, dadurch **gekennzeichnet,** daß als Feder eine Gummifeder (36), eine Stahlfeder (37), eine Gasfeder (44, 45) oder eine hydraulische Kolben-Zylinder-Einheit mit einem Gaspolster vorgesehen ist.

15. Abstreifvorrichtung nach Anspruch 14, dadurch **gekennzeichnet,** daß die Gummifeder (36), die Stahlfeder (37) oder die Gasfeder (44) hydraulisch gedämpft ist.

16. Abstreifvorrichtung nach Anspruch 7 oder 11, dadurch **gekennzeichnet,** daß an dem Träger (16) eine Lasche (15) oder ein Rohrabschnitt (47) befestigt und darin eine Gewindehülse (23) höheneinstellbar gehalten ist, und daß in der Gewindehülse (23) ein an dem Fuß des Abstreifelementes (1) befestigter Bolzen (24) drehbar gelagert ist.

17. Abstreifvorrichtung nach Anspruch 13 und 16, dadurch **gekennzeichnet,** daß das untere Ende des Bolzens auf einer Feder (36, 37) ruht, die ihrerseits von einer auf die Gewindehülse (34) aufgeschraubten Überwurf- oder Kappenmutter (35) gehalten ist.

18. Abstreifvorrichtung nach Anspruch 1 oder 2 und nach Anspruch 13, dadurch **gekennzeichnet,** daß der Träger als Rohr (16) ausgebildet ist, daß das Rohr (16) in der Anzahl der Abstreifelemente (1) Führungen (52) trägt, die zum Inneren des Rohres (16) offen sind, und daß in jeder Führung sich der Fuß (51) des Abstreifelementes (1) mit seinem freien Ende auf einer aufblasbaren Schlauchfeder (53) innerhalb des Rohres (16) abstützt.

19. Abstreifvorrichtung nach Anspruch 1 oder 2 und nach Anspruch 13, dadurch **gekennzeichnet,** daß der Träger als Rohr ausgebildet ist, daß das Rohr (16) in der Anzahl der Abstreifelemente (1) Sockel (56) trägt, die zum Inneren des Rohres offen sind, daß jeder Fuß eines Abstreifelementes (1) aus einer Führungshülse (58) mit einem drehbaren in Längsrichtung verschieblich gelagerten Bolzen (55) besteht, daß zwischen dem Bolzen (55) und der Führungshülse (58) eine Dichtungsmanschette (59, 60) angeordnet ist, und daß das Rohr (16) unter einen vorgegebenen, vorwählbaren Gasdruck gesetzt werden kann.

20. Abstreifvorrichtung nach einem der Ansprüche 16 bis 19, dadurch **gekennzeichnet,** daß zwischen jeder Führungshülse (58) bzw. jeder Führung in Form eines Zylinders (64) und jedem darin aufgenommenen Bolzen (65) eine Abdichtung (66) vorgesehen ist, insbesondere als O-Ring oder als Dichtungsmanschette.

21. Abstreifvorrichtung nach einen der vorhergehenden Ansprüche, dadurch **gekennzeichnet,** daß der Träger als Rohr (16) ausgebildet ist, daß an jedem Ende des Rohres ein Halter (86) zur klemmenden Aufnahme des Rohres (16) vorgesehen ist, und daß jeder Halter (86) mit Hilfe einer Gummitorsionsfeder (48) in Richtung auf die Unterseite des Gurtbandes (8) federbelastet ist.

22. Abstreifvorrichtung nach einem der Ansprüche 1 bis 20, dadurch **gekennzeichnet,** daß zwei Reihen von Abstreifelementen (1) vorgesehen sind, daß jede Reihe von einem Rohr (16) als Träger gehalten ist, daß an den Enden der Rohre (16) jeweils Seitenplatten (78) angebracht sind, die auf ihrer Außenseite einen Rohrstummel (80) tragen, daß jeder Rohrstummel (80) klemmend in einem Halter (86) aufgenommen ist, und daß jeder Halter (86) mit Hilfe mindestens einer Gummitorsionsfeder (48) in Richtung auf die Unterseite des Gurtbandes (8) federbelastet ist.

23. Abstreifvorrichtung nach Anspruch 21, dadurch **gekennzeichnet,** daß der Halter (86) mit Hilfe zweier Lenker (85) geführt ist, deren eines Ende jeweils an dem Halter (86) und deren anderes Ende jeweils an einem Systemträger (87) schwenkbar gelagert ist, wobei mindestens eines der Gelenke als Gummitorsionsfeder (84) ausgebildet ist.

**Claims**

1. Stripping device for the return run area of conveyor belts, consisting of an adjustable, stationary or of an elastically supported carrier (16) transverse to the running direction of the belt and of several stripping elements (1) which are each held at feet and which are held adjacent to one another, if appropriate in two rows, at the carrier (16) and each carry a stripping blade (4) which is set up so as to have a peeling action relative to the running direction of the belt, which blade is supported, with the aid of a stripping body (2) and by a torsion spring between each foot and this stripping body (2), hinged around an axis transverse to the running direction of the belt and elastically for an elastic evasion movement about this axis when there are non-strippable objects on the belt (8) with each stripping element (1) having a support for swivelling about an axis for automatically maintaining the parallelism of the stripping blade (4) to the belt (8), characterised in that the support (e.g. 92, 93) is so arranged that in the mounted, operational state the axis (20) forms an angle α of less than 90° with the advancing belt section on the side of the belt (8) facing the stripping element (1), that is, intersects the plane of the belt, and in that the support (e.g. 92, 93) is a freely swivellable, springless support.

2. Stripping device according to Claim 1, characterised in that in a manner known per se the foot of a perpendicular dropped from the hinged support (10, 11, 12) comprising the torsion spring (3) onto the stripped belt section (8) is located, in the running direction of the belt, at a distance from the point of contact between the stripping edge of the stripping blade (4) and the belt section (8), which, at a maximum, corresponds to half the distance between the hinged support (10, 11, 12) and the belt section (8).

3. Stripping device according to Claim 1 or 2, characterised in that the swivelling range is limited, particularly to a swivelling angle of 10° to 15° on both sides of centre position.

4. Stripping device according to Claim 3, characterised in that stops (74, 75) are provided for limiting the swivelling angle.

5. Stripping device according to Claim 4, characterised in that the stops are formed by the walls of an elongated hole (77) for a pin (74) which can be moved therein.

6. Stripping device according to Claim 1, characterised in that the swivelling axis (20) is formed by a swivelling connection between the stripping blade (4/62) and the stripping body (3/61) for the exclusive swivel movement of the stripping blade (4/62).

7. Stripping device according to Claim 1, characterised in that the swivelling axis (20) is formed by a swivelling connection between the foot (13/32) and a component (33, Figure 4) held at the carrier (16).

8. Stripping device according to Claim 6 or 7, characterised in that the swivelling connection is formed by a drilled hole (92) at one part (90/91) and a swivel (93) at the other part (3) (Figure 15).

9. Stripping device according to Claim 6 or 7, characterised in that the swivelling connection is formed by a roller bearing (48, Figure 8).

10. Stripping device according to claim 1, 2, 4, 5,6 or 7,characterised in that each stripping element is supported to be freely rotatable about a second axis (40) which extends essentially vertically with respect to the stripped belt section (8) and, seen in the direction of travel of the belt (8), intersects the belt section (8) in front of the cutting edge of the stripping element (1) or of the stripping blade (90).

11. Stripping device according to Claim 10, characterised in that the free rotatable support is arranged between the foot (13/70) and a component (71) held at the carrier (16) and that one part is constructed as pin and the other part as a sleeve (for example Figure 15).

12. Stripping device according to Claim 11, characterised in that the rotatable support is constructed to be displaceable in the longitudinal direction of the centre axis (40) or is held to be displaceable overall in the direction of the belt.

13. Stripping device according to Claim 12, characterised in that the rotatable support is spring loaded in the direction of displacement in such a manner that the stripping element (1) is pressed against the stripped belt section (8).

14. Stripping element according to Claim 13, characterised in that a rubber spring (36), a steel spring (37), a gas spring (44, 45) or a hydraulic piston-cylinder unit with a gas cushion provided as spring.

15. Stripping device according to Claim 14, characterised in that the rubber spring (36), the steel spring (37) or the gas spring (44) is hydraulically damped.

16. Stripping device according to Claim 7 or 11, characterised in that at the carrier (16) a lug (15) or a tube section (47) is mounted and a threaded sleeve (23) is held to be height adjustable therein and that a bolt (24) mounted at the foot of the stripping element (1) is rotatably supported in the threaded sleeve (23).

17. Stripping device according to Claim 16, characterised in that the lower end of the bolt rests on a spring (36; 37) which, in turn, is held by a retaining or cap nut (35) screwed onto the threaded sleeve (34).

18. Stripping device according to Claim 1, 2 or 13, characterized in that the carrier is constructed as tube (16), that tube (16) carries guides (52) in the number of stripping elements (1) which are open towards the inside of the tube (16) and that in each guide the free end of the foot (51) of the stripping element (1) is supported on an inflatable pneumatic spring (53) inside the tube (16) (Figure 8).

19. Stripping device according to Claim 1, 2 or 13, characterized in that the carrier is constructed as tube (16), that the tube carries sockets (56) in the number of the stripping elements (1) which sockets are open towards the inside of the tube, that each foot of a stripping element (1) consists of a guide sleeve (58) with a bolt (55) which is rotatably supported to be displaceable in the longitudinal direction, that a sealing collar (59, 60) is arranged between the bolt (55) and the guide sleeve (58) and that the tube (16) can be placed under a predetermined preselectable gas pressure.

20. Stripping device according to Claim 19, characterised in that between each guide sleeve (58) or each guide in the form of a cylinder (64) and each bolt (65) accommodated therein, a seal (66) is provided, particularly as an O ring or as a sealing collar.

21. Stripping device according to Claim 1 or 2, characterised in that the carrier is constructed as tube (16), that at each end of the tube a holder (86) for clamping accommodation of the tube (16) is provided and that each holder (86) is spring loaded in the direction of the underside of the belt (8) with the aid of a rubber torsion spring (84).

22. Stripping device according to Claim 1 or 2, characterised in that two rows of stripping elements (1) are provided, that each row is held by a tube (16) as carrier, that in each case side plates (78) are attached to the ends of the tubes (16) which plates carry on their outside a tube stub (80), that each tube stub (80) is clampingly accommodated in a holder (86) and that each holder (86) is spring loaded in the direction of the underside of the belt (8) with the aid of a rubber torsion spring (84).

23. Stripping device according to Claim 21, characterised in that the holder (86) is guided with the aid of two guide rods (85) one end of which is in each case swivellably supported on the holder (86) and the other end of which is in each case swivellably supported on a system carrier (87), at least one of the hinges being constructed as rubber torsion spring (84).

**Revendications**

1. Dispositif racleur pour le brin de retour des bandes transporteuses constitué par un support (16) réglable, fixe ou positionné à ressort transversalement par rapport au sens de la marche de la bande et par plusieurs éléments racleurs (1), maintenus respectivement à des pieds, qui sont maintenus sur le support (16) les uns à côté des autres le cas échéant en deux rangées et qui portent respectivement une lamelle racleuse (4), réglée en raclant vers le sens de marche de la bande, qui est maintenue à l'aide d'un corps racleur (2) et qui est positionnée par un ressort de torsion entre chaque pied et ce corps racleur (2) en étant articulée autour d'un axe transversalement par rapport au sens de la marche de la bande et en étant élastique sur la bande (a) pour un mouvement d'évitement élastique autour de cet axe lorsqu'il y a des corps que l'on ne peut pas racler, chaque élément racleur (1) présentant, pour le respect automatique du parallélisme de la lamelle racleuse (4) par rapport à la bande (8), un palier pour pivoter autour d'un axe (20), **caractérisé en ce** que le palier (par ex. 92, 93) est placé de telle manière qu'à l'état monté, prêt à être mis en marche, l'axe (20) coupe, sur le côté de la bande (8) tourné vers l'élément racleur (1) avec la portion de bande qui arrive, un angle α de moins de 90°, donc le plan de la bande, et que le palier (par ex, 92, 93) est un palier pivotant librement, sans ressort.

2. Dispositif racleur selon la revendication 1, **caractérisé en ce** que, de manière connue en soi, le pied d'une perpendiculaire abaissée par le palier (10, 11, 12) articulé, qui contient le ressort de torsion (3), sur la portion de bande (8) raclée se trouve dans le sens de marche de la bande à un certain écart par rapport au point de contact entre le bord racleur de la lamelle racleuse (4) et la portion de bande (8) qui, au plus, correspond à la moitié de l'écart du palier articulé (10, 11, 12) par rapport à la portion de bande (8).

3. Dispositif racleur selon la revendication 1 ou 2, **caractérisé en ce** que la plage de pivotement autour du pivot (20) est limitée, en particulier à un angle de pivotement de 10° à 15° des deux côtés de la position médiane.

4. Dispositif racleur selon la revendication 3, **caractérisé** on ce que des butées (74) sont prévues pour imiter l'angle de pivotement.

5. Dispositif racleur selon la revendication 4, **ca-**

ractérisé en ce que les butées sont formées par les parois d'un trou oblong (77) pour une cheville (74) qui s'y déplace.

6. Dispositif racleur selon la revendication 1 ou 2, **caractérisé en ce** que le pivot (20) est formé par une jonction pivotante entre la lamelle racleuse ( (4/62) et le corps racleur (68) pour le pivotement exclusif de la lamelle racleuse (4/62).

7. Dispositif racleur selon la revendication 1 ou 2, **caractérisé en ce** que le pivot (20) est formé par une jonction pivotante entre le pied (13/32) et un élément maintenu sur le support (16).

8. Dispositif racleur selon la revendication 6 ou 7, **caractérisé en ce** que la jonction pivotante est formée par une forure (92) sur l'une des parties et un tourillon (93) sur l'autre partie.

9. Dispositif racleur selon la revendication 6 ou 7, **caractérisé en ce** que la jonction pivotante est formée par un montage sur palier à roulement (48).

10. Dispositif racleur selon l'une des revendications précédentes, **caractérisé en ce** que chaque élément racleur est positionné en étant librement rotatif autour d'un second axe (40) qui croise la portion de bande (8) de manière essentiellement verticale par rapport à la portion de bande raclée (8) devant le bord racleur de la lamelle racleuse (90).

11. Dispositif racleur selon la revendication 10, **caractérisé en ce** que le palier librement rotatif est placé entre le pied (13/70) et un élément (71) maintenu sur le support (16) et que l'une des parties est formée comme une cheville et l'autre partie comme une douille.

12. Dispositif racleur selon la revendication 11, **caractérisé en** ce que le palier rotatif est configuré en étant translatable dans le sens longitudinal de l'axe médian (40) ou en étant translatable globalement dans le sens de la bande (8).

13. Dispositif racleur selon la revendication 12, **caractérisé en ce** que le palier rotatif est sous l'action d'un ressort dans le sens de translation de telle manière que l'élément racleur (1) est poussé contre la portion de bande raclée (8).

14. Dispositif racleur selon la revendication 13, **caractérisé en ce** qu'un ressort en caoutchouc (36), un ressort en acier (37), un ressort à gaz (44, 45) ou une unité hydraulique à cylindre et piston avec un coussin de gaz est prévue comme ressort.

15. Dispositif racleur selon la revendication 14, **caractérisé en ce** que le ressort en caoutchouc (36), le ressort en acier (37) ou le ressort à gaz (44) est amorti hydrauliquement.

16. Dispositif racleur selon la revendication 7 ou 11, **caractérisé en ce** qu'un collier de fixation (15) ou une portion de tuyau (47) est fixée au support (16) et qu'une douille filetée (23) y est maintenue en étant à hauteur réglable et qu'un boulon (24) fixé au pied de l'élément racleur (1) est positionné en étant rotatif dans la douille filetée (23).

17. Dispositif racleur selon la revendication 13 et 16, **caractérisé en ce** que l'extrémité inférieure du boulon repose sur un ressort (36, 37) qui est maintenu, à son tour, par un écrouraccord ou un écrou à chapeau (35) vissé sur la douille filetée (34).

18. Dispositif racleur selon la revendication 1 ou 2 ou selon la revendication 13, **caractérisé en ce** que le support est configuré comme tuyau (16), que le tuyau (16) porte un nombre de guidages (52) qui correspond au nombre des éléments racleurs (1), guidages qui sont ouverts vers l'intérieur du tuyau (16) et que le pied (51) de l'élément racleur (1) s'appuie dans chaque guidage avec son extrémité libre sur un ressort flexible gonflable (53) à l'intérieur du tuyau (16).

19. Dispositif racleur selon la revendication 1 ou 2 ou selon la revendication 13, **caractérisé en ce** que le support est configuré comme un tuyau, que le tuyau (16) porte un nombre de socles (56) qui correspond au nombre des éléments racleurs (1), que chaque pied d'un élément racleur (1) est constitué par une douille de guidage (58) avec un boulon (55) rotatif qui est positionné en étant translatable dans le sens longitudinal, qu'une garniture cylindrique (59, 60) est placée entre le boulon (55) et la douille de guidage (58) et que le tuyau (16) peut être mis sous une pression de gaz prédéterminée qui peut être présélectionnée.

20. Dispositif racleur selon l'une des revendications 16 à 19, **caractérisé en ce** qu'une étanchéité (66) est prévue entre chaque douille de guidage (58) ou chaque guidage sous forme d'un cylindre (64) et chaque boulon (65) qui y est logé, en particulier comme joint torique ou comme garniture cylindrique.

21. Dispositif racleur selon l'une des revendications précédentes, **caractérisé en ce** que le support est configuré comme un tuyau (16), qu'un appui (86) est prévu à chaque extrémité du tuyau pour le logement coïncé du tuyau (16) et que chaque appui (86) est chargé par ressort en direction de la face inférieure de la bande (8) à l'aide d'un ressort de torsion en caoutchouc (48).

22. Dispositif racleur selon l'une des revendications 1 à 20, **caractérisé en ce** que deux rangées d'éléments racleurs (1) sont prévues, que chaque rangée est maintenue par un tuyau (16) comme support, que des plaques latérales (78), qui portent un tronçon de tuyau (80) sur leur face extérieure, sont fixées respectivement aux extrémités des tuyaux (16), que chaque troncon de tuyau (80) est logé en étant coincé dans un appui (86) et que chaque appui (86) est chargé par ressort à l'aide d'au moins un ressort de torsion en caoutchouc (48) en direction de la face inférieure de la bande (8).

23. Dispositif racleur selon la revendication 21, **caractérisé en ce** que le support (86) est guidé à l'aide de deux bielles (85) dont l'une des extrémités est positionnée en étant pivotante respectivement sur le support (86) et l'autre extrémité respectivement à un support du système (87), au moins l'une des articulations étant configurée comme ressort de torsion en caoutchouc.

Fig. 1

Fig. 3

Fig. 2

Fig. 4

Fig. 5

Fig. 6

Fig. 7

Fig. 8

7

9

4

2

13'

33

16

15

34

18

19

35

Fig. 9

Fig. 12

Fig. 10

Fig. 11

Fig. 13

Fig. 14